# EUROPEAN PATENT APPLICATION

(11) **EP 4 424 495 A1**
(43) Date of publication of application: **04.09.2024**
(21) Application number: 23850322.1
(22) Date of filing: 25.07.2023
(51) Int. Cl.: B29C 65/00, H01M 50/105, B29C 65/18, B29C 65/30, B29L 31/00

(54) **SEALING APPARATUS**

(30) Priority: 05.08.2022 KR 20220098002
(71) Applicant: LG Energy Solution, Ltd., Seoul 07335 (KR)
(72) Inventor: LEE, Eung Hyun, Daejeon 34122 (KR)
(74) Representative: Plasseraud IP
(86) International application number: PCT/KR2023/010759
(87) International publication number: WO 2024/029816

(57) **Abstract**

The present technology relates to a sealing apparatus including an upper sealing block and a lower sealing block, a sealing gap measuring unit coupled to the upper sealing block, and a reference block coupled to the lower sealing block to face the sealing gap measuring unit, wherein the sealing gap measuring unit includes a probe housing coupled to the upper sealing block, a probe having both end portions protruding from an upper portion and a lower portion of the probe housing and installed to pass through the probe housing to be moveable relative to the probe housing, and a detection unit configured to detect a height or a change in height of the probe protruding from the upper portion of the probe housing.

## Description

### [Technical Field]

The present invention relates to a sealing apparatus for sealing a pouch type battery cell.

More specifically, the present invention relates to a sealing apparatus capable of measuring a sealing gap, which is an interval between upper and lower sealing blocks, directly connected to the sealing quality of a battery cell in real time even when the battery cell is sealed in a mass production process.

This application claims the benefit of priority based on Korean Patent Application No. 10-2022-0098002, filed on August 5, 2022, and the entire contents of the Korean patent application are incorporated herein by reference.

### [Background Art]

As technology development and demand for mobile, vehicle, and energy storage devices increase, the demand for secondary batteries capable of charging and discharging as an energy source is rapidly increasing, and among these secondary batteries, lithium secondary batteries with a high energy density and discharge voltage are most widely used.

In particular, when a high output and large capacity are required such as for vehicles or energy storage devices, medium-to-large battery packs with multiple electrically connected battery cells are used. Pouch type secondary batteries, which may be stacked with high integration and have a small weight-to-capacity, are mainly used in the medium-to-large battery packs. The pouch type secondary battery is a secondary battery with a structure in which an electrode assembly is stored in a pouch type case having a laminated structure.

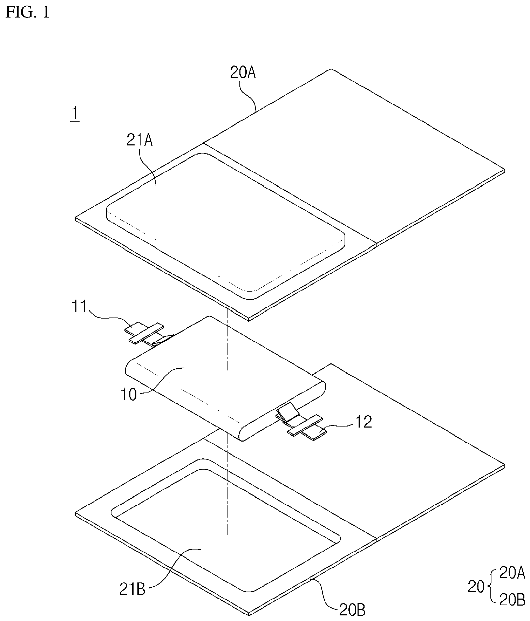

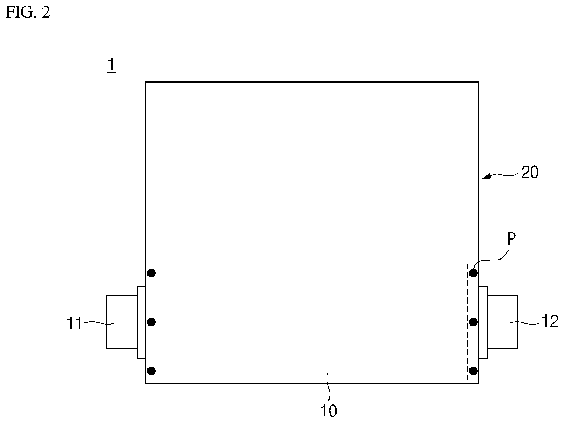

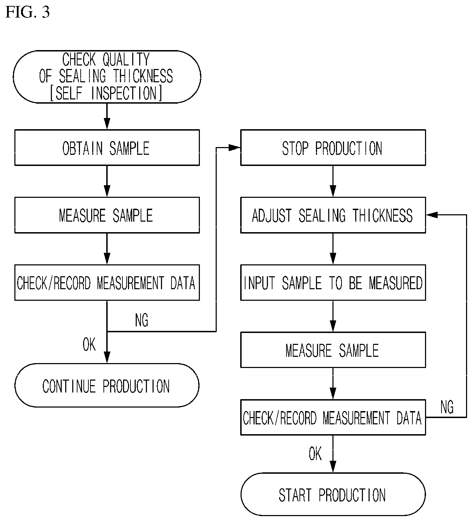

FIG. 1 is a schematic diagram illustrating a structure of a general pouch type battery cell, FIG. 2 is a schematic diagram illustrating a portion in which a sealing thickness is measured in a pouch type battery cell, and FIG. 3 is a flowchart illustrating a conventional process of adjusting a sealing thickness of a battery cell.

As illustrated in FIG. 1, a pouch type battery case 20 includes an upper case 20A and a lower case 20B. The upper case 20A and the lower case 20B include electrode assembly accommodating spaces 21A and 21B, respectively, and the electrode assembly 10 is accommodated in the electrode assembly accommodating spaces, an electrolyte is injected into the accommodating spaces, and then the upper and lower cases 20A and 20B are closed to seal a peripheral portion of the battery case 20. In other words, the peripheral portion of the battery case becomes a sealing target portion.

The electrode assembly 10 is a stack of a plurality of positive electrodes, separators, and negative electrodes, and electrode leads 11 and 12 are drawn out of both end portions or one end portion thereof.

As illustrated in FIG. 2, the peripheral portion of the case is sealed in a state in which the electrode assembly 10 is accommodated in the pouch type battery case 20. The pouch type battery case 20 forms the overall exterior of the secondary battery and is made of a flexible material. The pouch type battery case 20 includes a gas barrier layer, a surface protection layer, and a sealant layer. The gas barrier layer is intended to block the entry and exit of a gas and contains a metal, and for example, aluminum foil may be used. The surface protection layer may be positioned on an outermost layer of the battery case 20 and may be made of a wear-resistant and heat-resistant polymer such as nylon resin or PET. The sealant layer may be positioned at an innermost side thereof, and a polymer such as polypropylene (PP) may be used. The pouch type battery case 20 is manufactured by processing a film in which the layers are stacked into a pouch shape. Specifically, the battery case 20 is sealed by bring the upper case 20A and the lower case 20B into contact with each other and bonding the sealant layers by applying heat-pressing to edge portions thereof.

However, conventionally, while sealing was actually in progress, a sealing gap, which is an interval between upper and lower sealing blocks for sealing an edge portion of a battery case, or a change in sealing gap could not be measured in real time. Since the upper and lower sealing blocks were sealed with a high-temperature sealing portion heated by a heating block, it was difficult to install a sensor for measuring the sealing gap near the high-temperature sealing portion. This is because there is a high possibility that the measurement sensitivity of a temperature-sensitive sensor varies or the sensor is damaged due to high temperatures. Moreover, since the sealing gap varied in real time during sealing, it was very difficult to install the sensor near the sealing portion to track the change in sealing gap and directly measure the gap.

Therefore, conventionally, in order to check a sealing thickness of a sealing target portion of a battery cell 1, as illustrated in FIGS. 2 and 3, a sampling inspection that selects a sample and directly measures a sealing thickness of the sample at a plurality of points P was conducted. In other words, it was difficult to check the entirety of the sealing thickness of the battery cell.

In this case, since production lines should be stopped for the sampling inspection, actual production time decreased, thereby degrading productivity. In addition, in order to adjust the sealing gap through the sampling inspection and check whether sealing quality is good by the sealing with the adjusted sealing gap, a process of re-inputting a measured sample and re-checking the sealing thickness was required, thereby further degrading productivity.

As described above, conventionally, since the measurement of the sealing gap, which determines the sealing thickness, was not conducted in real time, there was a case in which the recognition of defective sealing according to the sealing gap or the change in gap was delayed, and thus defective battery cells were shipped. Therefore, there was a risk in quality control.

### [Related Art Document]

### [Patent Document]

Korean Patent Application Laid-Open No. 10-2021-0085975

### [Disclosure]

### [Technical Problem]

The present invention is intended to solve the above problems and is directed to providing a sealing apparatus capable of measuring a sealing gap between upper and lower sealing blocks in real time even when a pouch type battery case is being sealed.

### [Technical Solution]

A sealing apparatus according to one embodiment of the present invention for achieving the above object includes an upper sealing block and a lower sealing block that are disposed vertically with a battery cell interposed therebetween and move relative to each other to seal a sealing target portion of the battery cell, a sealing gap measuring unit coupled to the upper sealing block, and a reference block coupled to the lower sealing block to face the sealing gap measuring unit, wherein the sealing gap measuring unit includes a probe housing coupled to the upper sealing block, a probe having both end portions protruding from an upper portion and a lower portion of the probe housing and installed to pass through the probe housing to be moveable relative to the probe housing, and a detection unit configured to detect a height or a change in height of the probe protruding from the upper portion of the probe housing, and when the upper sealing block and the lower sealing block seal the battery cell by pressing while moving relative to each other, a sealing gap between the upper sealing block and the lower sealing block is measured based on a height increase of the probe detected by the detection unit as a lower end portion of the probe is moved upward by being pressed by the reference block.

Each of the upper sealing block and the lower sealing block may include a heating block configured to heat the sealing target portion and a sealing portion coupled to a lower portion of the heating block.

The sealing gap measuring unit may be installed at each of both sides of the upper sealing block with the sealing portion of the upper sealing block interposed between the sealing gap measuring unit, and the reference block may be installed at each of both sides of the lower sealing block with the sealing portion of the lower sealing block interposed between the reference block.

The detection unit may be a non-contact displacement sensor configured to measure the change in height of the probe or a non-contact position detection sensor configured to detect an upper position of the probe.

The detection unit may measure a height increase of the probe at the end point of a set sealing time determined for an individual battery cell, and the sealing gap may be measured based on the height increase of the probe at the end point.

The probe housing may include a through hole configured to accommodate the probe, and the probe may include a body portion including a first end portion and a second end portion protruding from the upper portion and the lower portion of the probe housing, respectively, and an enlarged probe diameter portion accommodated in the through hole of the probe housing between the first and second end portions and having a greater diameter than the body portion.

The probe may further include an elastic member wound around the body portion, and the probe may be moved downward with respect to the probe housing by an elastic force of the elastic member and moved upward with respect to the probe housing by a pressing force exerted by the reference block.

The sealing apparatus may further include a first guide member coupled to an inner circumferential surface of an upper portion of the through hole and including a first guide hole into which the probe is inserted, and a second guide member coupled to an inner circumferential surface of a lower portion of the through hole and including a second guide hole into which the probe is inserted, wherein the elastic member may be wound around a probe portion between a lower end of the first guide member and the enlarged probe diameter portion and positioned between an outer circumferential surface of the probe and the inner circumferential surface of the through hole.

The first guide member may include a guide body portion coupled to the inner circumferential surface of the upper portion of the through hole and an enlarged guide diameter portion fixedly coupled to an upper surface of the probe housing on an upper portion of the guide body portion, and each of the guide body portion and the enlarged guide diameter portion may include the first guide hole into which the probe is inserted.

The elastic member may have an elastic force set to be biased downward, and the probe may be moved downward by the enlarged probe diameter portion pressed downward by the elastic force of the elastic member, but the enlarged probe diameter portion may be blocked by an upper end surface of the second guide member to restrict further downward movement of the probe.

As the lower end portion of the probe is pressed by the reference block, when the enlarged probe diameter portion and the probe are moved upward against the elastic force of the elastic member, the elastic member may be compressed between the lower end of the first guide member and the enlarged probe diameter portion.

An upward movement position of the probe corresponding to a sealing gap that provides good sealing by moving the upper sealing block and the lower sealing block relative to each other before the sealing gap is measured may be obtained, and the obtained upward movement position may be set as a zero point position, and

Then, by moving the upper and lower sealing blocks relative to each other and comparing a height increase or a change in the height increase of the probe when a plurality of battery cells are actually sealed with the zero point position, a sealing gap or a change in sealing gap when the battery cells are actually sealed may be measured in real time based on the zero point position.

The zero point position may be the upward movement position of the probe when stoppers respectively provided in the upper sealing block and the lower sealing block come into contact with each other.

The sealing apparatus may further include a determination unit configured to measure the sealing gap at a time of detection by comparing the detected height increase of the probe with sealing gap data corresponding to the height increase and determine whether the sealing is defective by comparing the measured sealing gap with sealing gap data corresponding to defective sealing.

The sealing gap measuring unit may be coupled to the upper sealing block via a cover member configured to block heat of the heating block between the heating block of the upper sealing block and the sealing gap measuring unit.

### [Advantageous Effects]

According to the present invention, since a sealing gap between upper and lower sealing blocks can be measured in real time even when a battery case is being sealed, there is an advantage in that a sealing apparatus can be easily applied to an actual mass production process of battery cells.

In addition, by measuring the sealing gap in real time, it is possible to very easily conduct sealing thickness quality control in that it is possible to quickly find a battery cell with poor sealing quality.

In addition, since the measured sealing gap can be converted into data and related to sealing quality,, there is an advantage in that it is easy to manage the history of sealing quality and quality control is digitized and easy to manage.

### [Brief Description of the Drawings]

FIG. 1 is a schematic diagram illustrating a structure of a general pouch type battery cell.
FIG. 2 is a schematic diagram illustrating a portion in which a sealing thickness is measured in the pouch type battery cell.
FIG. 3 is a flowchart illustrating a conventional process of adjusting a sealing thickness of a battery cell.
FIG. 4 is a schematic diagram illustrating a state of a sealing apparatus according to the present invention before sealing starts.
FIG. 5 is a schematic diagram illustrating a state of the sealing apparatus according to the present invention when sealing starts and during sealing.
FIG. 6 is a schematic diagram illustrating a state of the sealing apparatus according to the present invention when sealing is completed.
FIG. 7 is a cross-sectional view illustrating the positional relationship between a sealing gap measuring unit and a reference block before sealing starts.
FIG. 8 is a cross-sectional view illustrating the positional relationship between the sealing gap measuring unit and the reference block when sealing starts and during sealing.
FIG. 9 is a cross-sectional view illustrating the positional relationship between the sealing gap measuring unit and the reference block when sealing is completed.
FIG. 10 is a schematic diagram illustrating main parts of a sealing apparatus according to another embodiment of the present invention.

### (DESCRIPTION OF REFERENCE NUMERALS)

100: upper sealing block
110: driver
120: heating block
121: stopper
130: sealing portion
200: lower sealing block
210: driver
220: heating block
221: stopper
230: sealing portion
B: mounting bracket
300: sealing gap measuring unit
310: probe housing
311: through hole
320: probe
321: body portion
322: enlarged probe diameter portion
330: detection unit
340: elastic member
350: first guide member
351: guide body portion
352: enlarged guide diameter portion
360: second guide member
400: reference block
500: determination unit
600: data storage unit
G1, G2: sealing gaps

### [Best Mode]

The present invention will become more apparent by describing exemplary embodiments of the present invention in detail with reference to the accompanying drawings. The embodiments described herein are exemplarily described to help the understanding of the invention, and it should be understood that the present invention can be implemented with various modifications different from the embodiments described herein. In addition, in order to help the understanding of the invention, the accompanying drawings are not drawn to actual scale and dimensions of some components may be exaggerated.

A sealing apparatus according to one embodiment of the present invention includes an upper sealing block and a lower sealing block that are disposed vertically with a battery cell interposed therebetween and move relative to each other to seal a sealing target portion of the battery cell, a sealing gap measuring unit coupled to the upper sealing block, and a reference block coupled to the lower sealing block to face the sealing gap measuring unit, and the sealing gap measuring unit includes a probe housing coupled to the upper sealing block, a probe having both end portions protruding from each of an upper portion and a lower portion of the probe housing and installed to pass through the probe housing to be moveable relative to the probe housing, and a detection unit for detecting a height or a change in height of the probe protruding from the upper portion of the probe housing, and when the upper sealing block and the lower sealing block seal the battery cells by pressing while moving relative to each other, a sealing gap between the upper sealing block and the lower sealing block is measured based on a height increase of the probe detected by the detection unit as a lower end portion of the probe is moved upward by being pressed by the reference block.

### [Mode for Invention]

Hereinafter, the present invention will be described in detail.

### (First embodiment)

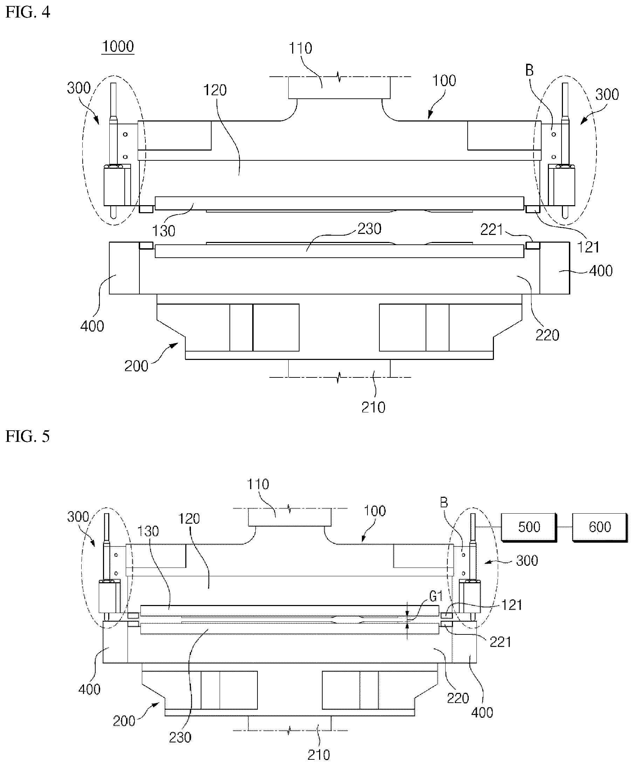

FIGS. 4 to 6 are schematic diagrams illustrating states of a sealing apparatus according to one embodiment of the present invention before sealing starts, when sealing starts, during sealing, and when sealing is completed.

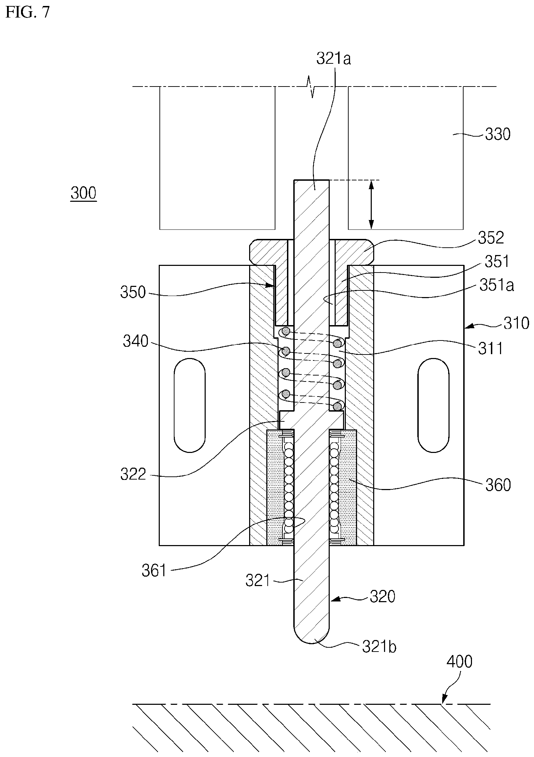

FIGS. 7 to 9 are cross-sectional views illustrating the positional relationship between a sealing gap measuring unit and a reference block before sealing starts, when sealing starts, during sealing, and when the sealing is completed.

A sealing apparatus 1000 according to the present invention includes an upper sealing block 100 and a lower sealing block 200 that are disposed vertically with a battery cell interposed therebetween and move relative to each other to seal a sealing target portion of the battery cell, a sealing gap measuring unit 300 coupled to the upper sealing block 100, and a reference block 400 coupled to the lower sealing block 200 to face the sealing gap measuring unit 300.

The upper sealing block 100 and the lower sealing block 200 are portions that directly seal the sealing target portion of a pouch type battery case by heating and pressing. To this end, each of the upper sealing block 100 and the lower sealing block 200 may include a heating block 120 or 220 for heating the sealing target portion and a sealing portion 130 or 230 coupled to a lower portion of the heating block 120 or 220. However, the coupling relationship between the heating blocks 120 and 220 and the sealing portions 130 and 230 is not limited thereto, and for example, a form in which a heating coil is included in the sealing portions 130 and 230 so that the heating blocks 120 and 220 and the sealing portions 130 and 230 are integrally formed is possible. The battery cell is positioned between the sealing portions 130 and 230 of the upper sealing block 100 and the lower sealing block 200, and the battery cell is sealed by the relative movement of the upper sealing block 100 and the lower sealing block 200, that is, movement in a direction in which the upper and lower sealing blocks 100 and 200 approach each other.

The meaning of relative movement includes both a case in which, in a state in which any one (e.g., the lower sealing block) of the upper and lower sealing blocks 100 and 200 is stationary, the other (e.g., the upper sealing block 100) moves and a case in which the upper sealing block 100 and the lower sealing block 200 move toward and away from each other at the same time.

In the embodiment of FIG. 4, it is assumed that the upper sealing block 100 and the lower sealing block 200 move at the same time. To this end, the upper sealing block 100 and the lower sealing block 200 include drivers 110 and 210, respectively. Examples of the drivers 110 and 210 include a pressure source and a cylinder movement mechanism of a pneumatic cylinder or hydraulic cylinder connected to the pressure source. Alternatively, a linear movement mechanism such as a servo motor (driving source) and a ball screw mechanism connected to the servo motor may also be adopted as the driver. Since the drivers and these driving mechanisms are known, detailed descriptions thereof will be omitted

FIG. 4 illustrates a state in which the upper sealing block 100 and the lower sealing block 200 are spaced apart from each other before sealing starts.

As illustrated in FIG. 5, when the upper sealing block 100 and the lower sealing block 200 approach each other by the drivers 110 and 210 provided in the upper sealing block 100 and the lower sealing block 200 and are positioned at a predetermined interval, the sealing starts. To be precise, the sealing of the battery cell starts when the sealing portion 130 of the upper sealing block 100 and the sealing portion 230 of the lower sealing block 200 are positioned at a predetermined interval G1. The predetermined gap G1 at this time is referred to as a sealing gap. However, the sealing gap is not a fixed value and gradually decreases as the upper and lower sealing blocks 100 and 200 move relative to each other to become closer from the start of sealing to the end of sealing.

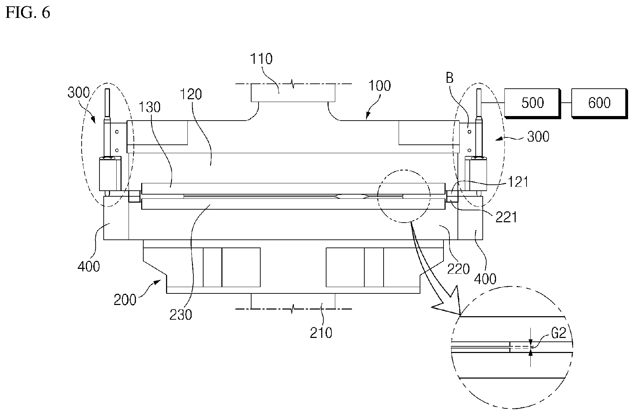

As illustrated in FIG. 6, a sealing gap G2 becomes a minimum at the end point of a set sealing time, and a thickness of the sealing target portion at this time becomes a sealing thickness. In other words, since the sealing gap and the sealing thickness have a proportional relationship, the sealing gap has a close relationship with the uniformity of the sealing thickness, that is, the uniformity of the sealing quality.

The upper sealing block 100 and the lower sealing block 200 include stoppers 121 and 221 protruding from both sides thereof, respectively. The upper sealing block 100 and the lower sealing block 200 move relative to each other even during the sealing of the sealing target portion, and when the stoppers 121 and 221 of the upper and lower sealing blocks 100 and 200 come into contact with each other, the relative movement is stopped. Since protruding heights of the stoppers 121 and 221 provided in the sealing blocks are higher than surfaces of the sealing portions 130 and 230 of the upper and lower sealing blocks 100 and 200, even when the stoppers 121 and 221 are in contact with each other, an interval is formed between the sealing portion 130 of the upper sealing block 100 and the sealing portion 230 of the lower sealing block 200. In other words, the interval at this time becomes the minimum sealing gap G2, and a thickness of the sealing target portion to be sealed with this sealing gap becomes a minimum sealing thickness.

Typically, the sealing gap G1 at a predetermined interval at which sealing starts is set as a design specification for manufacturing a target product. For example, when the upper and lower sealing blocks 100 and 200 are moved by the servo motor, a servo value of the servo motor is set so that the sealing portions 130 and 230 of the upper and lower sealing blocks 100 and 200 are positioned at a predetermined interval. Therefore, when the servo value of the servo motor, which is the driver 110 or 220 of each of the upper sealing block 100 and the lower sealing block 200, reaches a set value, a controller of the driver recognizes that the interval between the upper and lower sealing blocks 100 and 200 has become the predetermined interval, and sealing starts. After sealing starts, when the set sealing time elapses, the controller issues a movement instruction to each driver so that the upper sealing block 100 and the lower sealing block 200 move away from each other. For reference, the heating blocks 120 and 220 provided in the upper and lower sealing blocks 100 and 200 are already in a heated state before sealing starts, that is, in the state of FIG. 4. Therefore, at the time of reaching a sealing start position as illustrated in FIG. 5, the sealing of the sealing target portion of the battery cell is performed at a set temperature and pressure.

As described above, since the upper and lower sealing blocks 100 and 200 perform pressing while moving relative to each other even during sealing, the sealing gap changes. In addition, the sealing gap at the end of sealing does not become necessarily the minimum sealing gap when the stoppers 121 and 221 come into contact with each other. As illustrated in FIG. 6, it is ideal to achieve the minimum sealing thickness through the contact between the stoppers of the upper and lower sealing blocks 100 and 200, but actually, there is a case in which the sealing gap does not become the minimum at the end of sealing depending on a melting state, a pressing force, a heating temperature, or the like of a sealant provided on an inner surface of a case of the sealing target portion. What is important is that the sealing gap at the end of sealing should be managed within a range that does not cause defective sealing in the sealing target portion. For example, when the sealing gap at the end of sealing is large and thus the sealing thickness becomes excessively large, defective sealing occurs.

However, as illustrated in FIG. 3, conventionally, it was very difficult to measure a fluctuating sealing gap in real time in the mass production process in which a plurality of battery cells 1 are continuously sealed. Therefore, it was inevitable to perform a complicated process of sampling a battery cell, directly measuring a sealing thickness of only the sampled sample using a micrometer or the like, and re-adjusting a sealing gap to an interval when the sealing thickness was good.

The present invention is intended to solve such a problem, and in order to measure the sealing gap in real time, the sealing apparatus includes the sealing gap measuring unit 300 coupled to the upper sealing block 100 and the reference block 400 coupled to the lower sealing block 200 to face the sealing gap measuring unit 300.

Referring to FIGS. 4 to 6, the sealing gap measuring unit 300 is installed at each of both sides of the upper sealing block 100 with the sealing portion 130 of the upper sealing block 100 interposed between the sealing gap measuring unit 300, the reference block 400 is also installed at each of both sides of the lower sealing block 200 with the sealing portion 230 of the lower sealing block 200 interposed between the reference block 400. The sealing gap measuring unit 300 and the reference block 400 may also be installed at any one side of the sealing blocks. However, since it is preferable to evaluate the flatness or sealing thickness of a sealing surface of the sealing target portion throughout the entirety of the sealing target portion, as illustrated in FIGS. 4 to 6, it is preferable that the sealing gap measuring unit 300 and the reference block 400 are installed symmetrically at both sides of the upper and lower sealing blocks 100 and 200. In this case, by measuring and comparing the sealing gaps at both left and right sides in real time, it is possible to comprehensively check the sealing quality of the sealing target portion of the battery cell.

The sealing gap measuring unit 300 is fixedly coupled to both sides of the upper sealing block 100. Therefore, the sealing gap measuring unit 300 also moves when the upper sealing block 100 moves. Referring to FIG. 4, the sealing gap measuring unit 300 is coupled to a side portion of the upper sealing block 100 through a mounting bracket B. In addition, the reference block 400 is fixedly coupled to the lower sealing block 200 and also moves when the lower sealing block 200 moves. The reference block 400 is installed on the lower sealing block 200 to face the sealing gap measuring unit 300. Therefore, when the upper sealing block 100 and the lower sealing block 200 move toward each other, the sealing gap measuring unit 300 and the reference block 400 also move toward each other.

When sealing starts, as illustrated in FIG. 5, a probe 320 installed in the sealing gap measuring unit 300 comes into contact with an upper surface of the reference block 400.

The sealing gap measuring unit 300 includes a probe housing 310 coupled to the upper sealing block 100, a probe 320 installed in the probe housing 310, and a detection unit 330 for detecting a height or a change in height of the probe 320.

The probe housing 310 is a place in which the probe 320 is installed by being accommodated, and is fixedly coupled to the upper sealing block 100. Therefore, when the upper sealing block 100 moves, the probe housing 310 also moves. As illustrated in the drawing, the probe housing 310 may have a quadrangular pillar shape. However, the probe housing 310 is not limited thereto and may have another shape such as a cylindrical shape.

End portions of the probe 320 protrude from an upper portion and a lower portion of the probe housing 310, and the probe 320 is installed to pass through the probe housing 310 to be moveable relative to the probe housing 310. In other words, the probe is also installed in the probe housing 310 and moves along with the movement of the probe housing 310. Therefore, when the upper sealing block relatively moves (moves downward) to approach the lower sealing block, the probe 320 also moves downward to approach the reference block 400 of the lower sealing block.

As illustrated in FIG. 5, when the upper and lower sealing blocks 100 and 200 are positioned with the sealing gap at the predetermined interval at which the sealing of the battery cell starts, the probe 320 is also in contact with the upper surface of the reference block 400 and pressed by the upper surface thereof. In this case, when the upper sealing block 100 and the lower sealing block 200 seal the battery cell by pressing while moving relative to each other from the start of sealing to the end of sealing, a lower end portion of the probe is also continuously pressed by the reference block 400. Therefore, an upper portion of the measuring probe moves relative to the probe housing 310 to protrude (moves up) further from the upper portion of the probe housing 310. Based on a height increase of the protruding probe 320, the sealing gap between the upper sealing block 100 and the lower sealing block 200 may be measured.

The detection unit 330 for detecting the height or change in height of the probe 320 protruding from the upper portion of the probe housing 310 is installed on the upper portion of the probe housing 310. The detection unit 330 may be a non-contact displacement sensor for measuring the change in height of the probe 320 or a non-contact position sensor for detecting an upper position of the probe 320. For example, the detection unit 330 may be an optical sensor including a light emitting sensor and a light receiving sensor. When the probe 320 is positioned between the light emitting sensor and the light receiving sensor and a plurality of light transmission sensors are disposed in a height direction of the probe 320 at both sides of the probe 320, the height (i.e., a length protruding from the probe housing 310) and the change in height of the probe 320 may be measured. In other words, light transmitted from the light emitting sensor is reflected by the probe, and the light receiving sensor receives the light, and thus the height or change in height of the probe 320 may be detected. In this case, the optical sensor becomes the non-contact displacement sensor. Alternatively, a magnet may be installed on an upper end portion of the probe 320 or a portion adjacent thereto, and an upper position of the probe 320 or a change in position thereof may be detected by detecting a position of the magnet. As such a position detection sensor, for example, a Hall sensor using the Hall effect may be used. A sensor as the detection unit 330 for detecting the height or change in height of the probe 320 is not limited thereto, and another appropriate sensor may also be adopted as long as it may accurately measure the change or increase in height of the probe 320 in correspondence to the height of the probe 320.

The probe 320 is installed so that both end portions protrude from the upper portion and the lower portion of the probe housing 310. The lower end portion of the probe 320 should protrude from the lower portion of the probe housing 310, so that the probe 320 may be pressed by coming into contact with the reference block 400 at the start of sealing. In addition, the upper end portion of the probe 320 should protrude from the upper portion of the probe housing 310 at the start of sealing, so that the change (increase) in protruding height from an initial protruding height to the end of sealing may be measured.

In addition, the probe 320 is installed to pass through the probe housing 310 to be moveable relative to the probe housing 310. When the probe 320 is in a state of being fixedly coupled to the probe housing 310, the probe 320 cannot move upward even when pressed by the reference block 400. Therefore, the probe 320 should be installed to be moveable relative to the probe housing 310. In other words, the probe 320 is installed so that the lower end portion thereof is displaced by being pressed by the reference block 400 to move upward relative to the probe housing 310 when the probe housing 310 moves downward.

Specifically, the probe 320 is installed to be moveable vertically in a restricted state relative to the probe housing 310. To this end, a predetermined restriction member is installed between the probe housing 310 and the probe 320. Due to the restriction member, the probe 320 is provided to move vertically in a limited range in the probe housing 310.

FIGS. 7 to 9 illustrate an example of a vertical movement unit and a restriction unit of the probe.

As illustrated in FIG. 7, the probe housing 310 includes a through hole 311 for accommodating the probe 320. The probe 320 may include a body portion 321 including a first end portion 321a and a second end portion 321b protruding from the upper portion and the lower portion of the probe housing 310, respectively, and an enlarged probe diameter portion 322 accommodated in the through hole 311 of the probe housing 310 between the first and second end portions 321a and 321b and having a greater diameter than the body portion 321. An upper surface and a lower surface of the enlarged probe diameter portion 322 may become restriction surfaces that restrict the vertical movement of the probe 320, as will be described below.

In order to achieve the limited vertical movement of the probe 320 in the probe housing 310, an elastic member 340 is wound around the body portion 321 of the probe 320 as a first restriction member. As an example, the probe 320 may be moved downward with respect to the probe housing 310 by an elastic force of the elastic member 340 and moved upward with respect to the probe housing 310 by a pressing force exerted by the reference block 400.

A first guide member 350 and a second guide member 360 are provided in the probe housing 310 as second and third restriction members for restricting the expansion and contraction of the elastic member 340 and the movement of the probe 320. In other words, the elastic member 340 and the first and second guide members 350 and 360 become first, second, and third restriction members for the limited vertical movement of the probe.

As illustrated in FIG. 7, the first guide member 350 includes a guide body portion 351 coupled to an inner circumferential surface of an upper portion of the through hole 311 and an enlarged guide diameter portion 352 fixedly coupled to an upper surface of the probe housing 310 on an upper portion of the guide body portion 351. In addition, the guide body portion 351 and the enlarged guide diameter portion 352 include a first guide hole 351a into which the probe 320 is inserted. Therefore, the first guide member 350 simultaneously achieves functions of guiding the movement of the probe 320 in the first guide hole 351a and restricting the upward movement thereof.

Meanwhile, a second guide member 360 is coupled to an inner circumferential surface of a lower portion of the through hole 311. The second guide member 360 includes a second guide hole 361 into which the probe 320 is inserted and simultaneously achieves functions of guiding the movement of the probe 320 in the second guide hole 361 and restricting the downward movement thereof.

Preferably, at least one of the first guide member 350 and the second guide member 360 may be formed as a ball bushing. The ball bushing has a ball bearing installed in a guide hole of a guide member. When the guide member is formed as such as ball bushing, the probe 320 may move smoothly while reducing friction as much as possible when repeatedly moving up and down in the guide hole. Since the specific form of the ball bushing is known, detailed description thereof will be omitted. In the present embodiment, the second guide member 360 is formed as a ball bushing unit to allow the probe 320 to move stably in the probe housing 310.

The elastic member 340 is wound around a probe portion between a lower end of the first guide member 350 and the enlarged probe diameter portion 322 and positioned between the outer circumferential surface of the probe 320 and the inner circumferential surface of the through hole 311. As illustrated in FIGS. 7 to 9, a size and a diameter of the elastic member 340 may be set so that an upper end of the elastic member 340 is in contact with a lower end surface of the guide body portion 351 of the first guide member 350 and a lower end of the elastic member 340 is in contact with an upper surface of the enlarged probe diameter portion 322 of the probe 320. Therefore, when the probe 320 moves up, the upper surface of the enlarged probe diameter portion 322 becomes a pressing surface that presses the elastic member 340, and when the probe 320 moves downward, the upper surface of the enlarged probe diameter portion 322 becomes a pressure receiving surface that receives a pressure of the elastic member 340. If necessary, the upper end of the elastic member 340 may be fixed to the lower end of the first guide member 350, or the lower end of the elastic member 340 may be fixed to the upper surface of the enlarged probe diameter portion 322. Therefore, the elastic member 340 may be stably stretched and contracted between the enlarged probe diameter portion 322 and the first guide member 350.

A diameter of the enlarged probe diameter portion 322 is set so that a lower surface of the enlarged probe diameter portion 322 is restricted by coming into contact with an upper end surface of the second guide member 360.

Operation processes of the probe 320 of the sealing gap measuring unit 300 and the reference block 400 when the sealing of the battery cell is performed according to the relative movement of the upper sealing block 100 and the lower sealing block 200 will be described.

First, as illustrated in FIG. 4, in a state in which the upper sealing block 100 and the lower sealing block 200 are spaced apart from each other before sealing starts, as illustrated in FIG. 7, the lower end portion of the probe 320 of the sealing gap measuring unit 300 is spaced apart from the reference block 400 coupled to the lower sealing block 200.

In this state, the elastic force of the elastic member 340 is set to be biased downward. Therefore, the upper surface of the enlarged probe diameter portion 322 is pressed downward by the elastic force of the elastic member 340. Therefore, the probe 320 moves downward so that the lower end portion of the probe protrudes from the lower portion of the probe housing 310. This state is the state before the sealing of the upper and lower sealing blocks 100 and 200.

The probe 320 is moved downward by receiving the force from the elastic member 340, but the enlarged probe diameter portion 322 is blocked by the upper end surface of the second guide member 360 to restrict further downward movement of the probe 320. In

FIG. 7, the enlarged probe diameter portion 322 is in contact with the upper end surface of the second guide member 360. However, depending on the length of the probe 320, the elastic force, expansion/contraction strokes of the elastic member 340, or the like, the enlarged probe diameter portion 322 may be maintained in a state of not coming into contact with the upper end surface of the second guide member 360, and this state may be the state before sealing.

In this state, a portion of the upper portion of the probe 320 protrudes from the probe housing 310. The detection unit 330 measures a protruding length or protruding height of the portion of the probe 320 and records the protruding length or protruding height as a height of the probe before sealing.

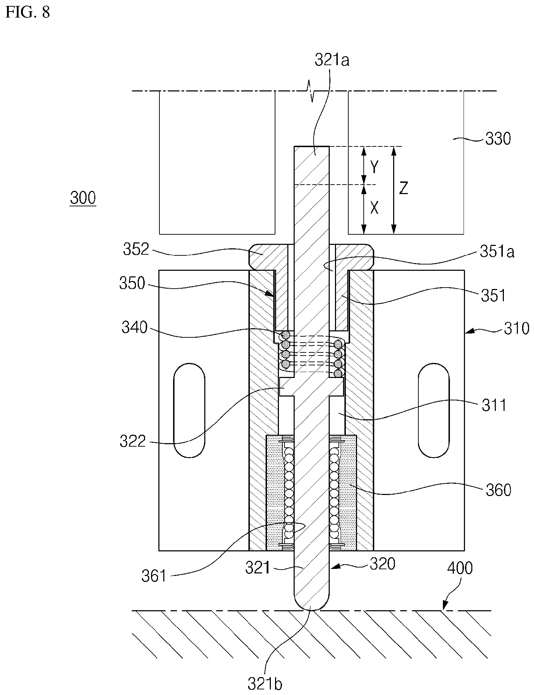

When the upper sealing block 100 and the lower sealing block 200 move relative to each other and the sealing gap becomes the predetermined distance G1 as illustrated in FIG. 5, the sealing of the sealing target portion starts. In this state, as illustrated in FIG. 8, the lower end portion of the probe 320 coupled to the upper sealing block 100 is in contact with the reference block 400 coupled to the lower sealing block 200. As sealing progresses, the probe 320 is pressed by the reference block 400 to move upward through the through hole 311 of the probe housing 310 and the first and second guide holes 351a and 361 of the first and second guide members 350 and 360. At this time, the enlarged probe diameter portion 322 moves upward against the elastic force of the elastic member 340. Therefore, the protruding height of the upper portion of the probe 320 from the probe housing 310 gradually increases. In other words, an upward movement amount gradually increases. Since the upper end of the elastic member 340 is restricted by a lower end surface of the first guide member 350, as the enlarged probe diameter portion 322 moves upward, the elastic member 340 is compressed between the lower end of the first guide member 350 and the enlarged probe diameter portion 322. Referring to FIG. 8, it can be seen that the probe 320 moves upward and thus the protruding height thereof becomes greater. In other words, the probe 320 moves upward from an initial protrusion height X by Y to reach a protruding height Z. The detection unit 330 may measure the changed protruding height Z or measure the upward movement amount Y, which is a change in protruding height. The Z or Y is inversely proportional to the sealing gap, which is an interval between the sealing portions of the upper sealing block 100 and the lower sealing block 200. Therefore, the sealing gap may be measured by the detection unit 330 measuring the height increase of the upper portion of probe 320 protruding from the probe housing 310. Since the sealing gap is proportional to the sealing thickness, the sealing gap or sealing thickness may be quantitatively measured by measuring the height increase.

For convenience of description, the protruding height of the probe when the lower end portion of the probe 320 starts to come into contact with the reference block 400 is regarded as the protruding height at the start of sealing. However, depending on the sealing gap, a protruding height when the lower end portion of the probe is pressed by coming into contact with the reference block 400 and the probe 320 is moved upward by a predetermined length may be regarded as the protruding height when sealing starts. In this case, the sealing gap may be measured by measuring further upward movement from the upwardly moved protruding height at the start of sealing as sealing progresses.

Meanwhile, at the end point of the set sealing time from the start of sealing, the upper and lower sealing blocks 100 and 200 are in a state of being as close as possible. In this state, the probe 320 is in a state of being maximally moved upward, and the upward movement amount Y also becomes a maximum. The interval between the sealing portions of the upper and lower sealing blocks 100 and 200 at this maximum upward movement amount becomes the minimum sealing gap G2. Since this minimum sealing gap indicates the sealing thickness of the sealing target portion, it is necessary to accurately measure this sealing gap. In the present invention, the minimum sealing gap may be measured by measuring the maximum height Z or the maximum upward movement amount Y of the probe 320 at the maximum upward movement amount.

When the maximum height or maximum upward movement amount corresponds to the set minimum sealing gap, the sealing thickness of the corresponding battery cell is determined to be good. When the maximum height or maximum upward movement amount does not reach the set minimum sealing gap, the battery cell may be determined to have a defective seal.

However, actually, it is difficult to accurately control the sealing gap on a pinpoint basis. Therefore, it is preferable to perform range control that determines that the sealing gap passes when the protruding height of the probe 320 falls within a predetermined upper and lower limit range set from the maximum height or maximum upward movement amount. In other words, the quality of the sealing gap or sealing thickness may be determined as pass when the protruding height of the probe 320 falls within the predetermined upper limit or lower limit range from a target maximum upward movement amount (corresponding to the minimum sealing gap) and determined as fail when the protruding height of the probe 320 is out of the range,

As illustrated in FIG. 6, the controller of the sealing apparatus 1000 or the drivers 110 and 210 may move the upper and lower sealing blocks 100 and 200 toward each other until the stoppers 121 and 221 of the upper and lower sealing blocks 100 and 200 come into contact with each other. In other words, the controller may control the drivers of the upper and lower sealing blocks 100 and 200 to achieve the minimum sealing gap when the stoppers come into contact with each other. Theoretically, in this case, the protruding height of the probe 320 becomes a maximum.

However, even when the drivers move the upper and lower sealing blocks 100 and 200 with the set servo value, there is a case in which the stoppers are not really in contact with each other. This is because the sealing gap may not become a minimum even at the end of sealing depending on the melting state, the pressing force, the heating temperature, or the like of the sealant provided on the inner surface of the case of the battery cell. Therefore, in this case, even though the battery cells are not actually sealed at the sealing thickness corresponding to the minimum sealing gap, the sealing thickness may be determined as pass and thus battery cells with defective sealing may be shipped to the outside. In this case, it is necessary to adjust the minimum sealing gap. Conventionally, since the sealing gap could not be measured in real time, there was a case in which the battery cell was determined as pass even when the battery cell was not sealed with the minimum sealing gap.

According to the present invention, the change in sealing gap may be measured in real time according to the upward movement amount of the probe 320, thereby preventing the above problem. In other words, an upward movement position of the probe 320 corresponding to the sealing gap that provides good sealing may be obtained by the relative movement of the upper and lower sealing blocks 100 and 200 in advance, and the upward movement position may be set as a zero point position. When setting the zero point position, it is not necessary to install the battery cell between the upper and lower sealing blocks. The zero point position may be the upward movement position of the probe 320 when the stoppers provided in the upper sealing block 100 and the lower sealing block 200 are in contact with each other. As described above, when the zero point position is set, it is possible to prevent a case in which defective sealing is not detected.

After the zero point position is set, the sealing gap or change in sealing gap when the battery cell is actually sealed may be measured in real time by comparing the increase or change in height of the probe 320 when the plurality of battery cells are actually sealed by relatively moving the upper and lower sealing blocks 100 and 200 with the zero point position. For example, it is assumed that the servo values of the drivers of the upper and lower sealing blocks are set so that the stoppers of the upper and lower sealing blocks 100 and 200 are in contact with each other at the end point of the set sealing time and the height of the probe 320 when the stoppers are in contact with each other is set as the zero point position. At the point when the set sealing time ends and the upper and lower sealing blocks 100 and 200 start to move away from each other, when the height of the probe 320 is less than the zero point position or less than the set lower limit range from the zero point position, it is necessary to adjust the sealing gap between the upper and lower sealing blocks 100 and 200. In other words, according to the present invention, a sealing gap adjustment timing may be identified by comparing the upward movement amount of the probe 320 with the zero point position and measuring the sealing gap or change in sealing gap in real time therefrom. Therefore, it is possible to quickly detect defective sealing, such as sealing with an excessive thickness, thereby increasing the reliability of sealing quality control.

In addition, by storing data on the height and/or change in height of the probe 320 and quantifying and managing the data, it is possible to quantitatively manage the history of the sealing gap and/or the sealing thickness represented by the height of the probe. Therefore, when a semi-finished battery cell or finished battery cell is defective, it is possible to track whether the defect was caused by sealing quality by checking the history of the sealing data.

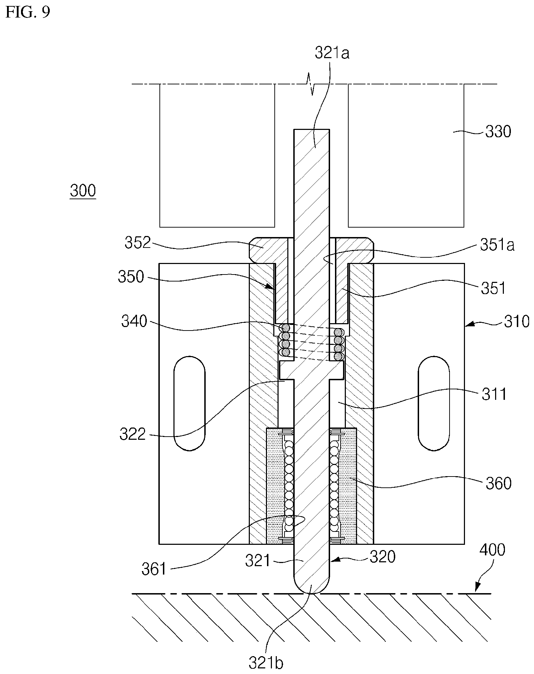

Meanwhile, FIG. 9 illustrates the maximum upward movement limit of the probe 320. According to the relative movement of the upper and lower sealing blocks 100 and 200, when the end portion 321b of the probe is pressed by the reference block 400, the enlarged probe diameter portion 322 presses the elastic member 340 while moving upward. Since the upper end of the elastic member 340 is restricted by the lower end surface of the first guide member 350, when the elastic member 340 is maximally compressed between the first guide member 350 and the enlarged probe diameter portion 322, the probe 320 may no longer rise above the upper portion of the probe housing 310. The upward movement position of the probe at this time becomes a theoretical maximum upward movement limit. For example, as illustrated in FIG. 6, the maximum upward movement position of the probe at the minimum sealing gap in which the stoppers of the upper and lower sealing blocks are in contact with each other may be set as the maximum upward movement limit position in FIG. 9.

However, FIG. 9 illustrates the theoretical upward movement limit of the probe 320, and the maximum upward movement height of the probe 320 corresponding to the minimum sealing gap when the stoppers are in contact with each other does not necessarily need to be the position of FIG. 9. In other words, the maximum upward movement height of the probe 320 may be determined in the range between FIGS. 8 and 9.

### (Second embodiment)

As described above, the sealing gap is inversely proportional to the upward movement of the probe 320. However, depending on the type or condition of the battery cell, the amount of sealant, a sealing temperature or pressure, or moving speeds of the upper and lower sealing blocks 100 and 200, a degree of inverse proportion may vary slightly. For example, data on the sealing gap corresponding to the height increase of the probe 320 for each type of battery cell or each sealing temperature or pressure may be obtained in advance, and the sealing gap between the upper and lower sealing blocks 100 and 200 may be measured (checked) in real time by comparing the detected actual height increase with this sealing gap data. In addition, it is possible to determine whether the sealing is defective by comparing the measured sealing gap with sealing gap data corresponding to defective sealing.

The sealing apparatus 1000 of the present embodiment further includes a determination unit 500 for measuring the sealing gap at the time of detection by comparing the detected height increase of the probe 320 with the sealing gap data corresponding to the height increase and determining whether the sealing is defective by comparing the measured sealing gap with the sealing gap data corresponding to defective sealing.

If necessary, the present invention may further include a data storage unit 600 in which data on the sealing gap corresponding to the height increase of the probe 320 and data on the sealing gap corresponding to the defective sealing are previously stored. Alternatively, the correlation (i.e., a correlation with the degree of inverse proportion) between the height increase of the probe 320 and the sealing gap may be obtained in advance and stored in the data storage unit 600. When this specific correlation is identified, the height increase of the probe may be detected by the sealing apparatus 1000 according to the present invention, and the sealing gap may be obtained immediately in real time from the correlation.

Therefore, the determination unit 500 may measure the sealing gap at the time of the detection by the detection unit 330 from the correlation between the height increase of the probe and the sealing gap data corresponding to the height increase or the height increase and the sealing gap and determine whether the sealing is defective by comparing the measured sealing gap with the sealing gap data corresponding to defective sealing.

### (Third embodiment)

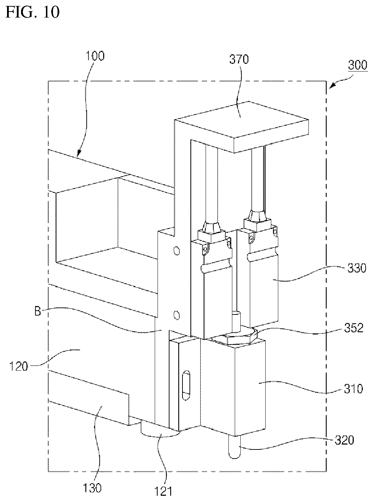

FIG. 10 is a schematic diagram illustrating main parts of a sealing apparatus according to another embodiment of the present invention.

The detection unit 330 may include an electronic component sensitive to heat, such as an optical sensor or a position sensor.

The sealing gap measuring unit 300 is coupled to the upper sealing block 100 including the heating block 120. Therefore, the detection unit 330 of the sealing gap measuring unit 300 may be damaged by the heat of the heating block 120, or the measurement sensitivity thereof may be affected thereby.

In the present embodiment, in order to protect the detection unit 330, a cover member 370 for blocking the heat of the heating block is installed between the heating block of the upper sealing block 100 and the sealing gap measuring unit 300.

As illustrated in FIG. 10, the sealing gap measuring unit 300 is coupled to the upper sealing block 100 via the cover member 370. Preferably, the cover member 370 is configured in the form of a cover for covering the entire sealing gap measuring unit 300, particularly, the detection unit 330. The cover member 370 may be a heat radiating plate made of a metal material or a plastic material. If necessary, a heat radiating fin capable of radiating heat may be disposed on at least one side surface of the cover member 370.

The cover member may be installed integrally with or separately from the mounting bracket B.

Meanwhile, the upper surface of the reference block 400 in contact with the lower end portion of the probe needs to be a flat surface. In addition, since the probe 320 is pressed repeatedly while in contact with the reference block 400, the probe 320 and the reference block may be made of a material with high stiffness, for example, a material containing titanium or a titanium alloy.

In addition, in the above-described embodiment, it was described that the upper sealing block and the lower sealing block move together. However, the sealing apparatus according to the present invention may also be applied to a case in which the upper sealing block is fixed and the lower sealing block moves or a case in which the lower sealing block is fixed and the upper sealing block moves.

The above description is merely the exemplary description of the technical spirit of the present invention, and those skilled in the art to which the present invention pertains will be able to variously modify and change the present invention without departing from the essential characteristics of the present invention. Therefore, the drawings disclosed in the present invention are not intended to limit the technical spirit of the present invention, but are for illustrative purposes, and the scope of the technical spirit of the present invention is not limited by these drawings. The scope of the present invention should be construed by the appended claims, and all technical ideas within the equivalent range should be construed as being included in the scope of the present invention.

## Claims

1. A sealing apparatus comprising:
an upper sealing block and a lower sealing block that are disposed vertically with a battery cell interposed therebetween and move relative to each other to seal a sealing target portion of the battery cell;
a sealing gap measuring unit coupled to the upper sealing block; and
a reference block coupled to the lower sealing block to face the sealing gap measuring unit,
wherein the sealing gap measuring unit includes a probe housing coupled to the upper sealing block, a probe having both end portions protruding from an upper portion and a lower portion of the probe housing and installed to pass through the probe housing to be moveable relative to the probe housing, and a detection unit configured to detect a height or a change in height of the probe protruding from the upper portion of the probe housing, and
when the upper sealing block and the lower sealing block seal the battery cell by pressing while moving relative to each other, a sealing gap between the upper sealing block and the lower sealing block is measured based on a height increase of the probe detected by the detection unit as a lower end portion of the probe is moved upward by being pressed by the reference block.

2. The sealing apparatus of claim 1, wherein each of the upper sealing block and the lower sealing block includes a heating block configured to heat the sealing target portion and a sealing portion coupled to a lower portion of the heating block.

3. The sealing apparatus of claim 2, wherein the sealing gap measuring unit is installed at each of both sides of the upper sealing block with the sealing portion of the upper sealing block interposed between the sealing gap measuring unit, and
the reference block is installed at each of both sides of the lower sealing block with the sealing portion of the lower sealing block interposed between the reference block.

4. The sealing apparatus of claim 1, wherein the detection unit is a non-contact displacement sensor configured to measure the change in height of the probe or a non-contact position detection sensor configured to detect an upper position of the probe.

5. The sealing apparatus of claim 1, wherein the detection unit measures a height increase of the probe at an end point of a set sealing time determined for an individual battery cell, and
the sealing gap is measured based on the height increase of the probe at the end point.

6. The sealing apparatus of claim 1, wherein the probe housing includes a through hole configured to accommodate the probe, and
the probe includes a body portion including a first end portion and a second end portion protruding from the upper portion and the lower portion of the probe housing, respectively, and an enlarged probe diameter portion accommodated in the through hole of the probe housing between the first and second end portions and having a greater diameter than the body portion.

7. The sealing apparatus of claim 6, wherein the probe further includes an elastic member wound around the body portion, and
the probe is moved downward with respect to the probe housing by an elastic force of the elastic member and moved upward with respect to the probe housing by a pressing force exerted by the reference block.

8. The sealing apparatus of claim 7, further comprising:
a first guide member coupled to an inner circumferential surface of an upper portion of the through hole and including a first guide hole into which the probe is inserted; and
a second guide member coupled to an inner circumferential surface of a lower portion of the through hole and including a second guide hole into which the probe is inserted,
wherein the elastic member is wound around a probe portion between a lower end of the first guide member and the enlarged probe diameter portion and positioned between an outer circumferential surface of the probe and the inner circumferential surface of the through hole.

9. The sealing apparatus of claim 8, wherein the first guide member includes a guide body portion coupled to the inner circumferential surface of the upper portion of the through hole and an enlarged guide diameter portion fixedly coupled to an upper surface of the probe housing on an upper portion of the guide body portion, and
each of the guide body portion and the enlarged guide diameter portion includes the first guide hole into which the probe is inserted.

10. The sealing apparatus of claim 8, wherein the elastic member has an elastic force set to be biased downward, and
the probe is moved downward by the enlarged probe diameter portion pressed downward by the elastic force of the elastic member, but the enlarged probe diameter portion is blocked by an upper end surface of the second guide member to restrict further downward movement of the probe.

11. The sealing apparatus of claim 8, wherein, as the lower end portion of the probe is pressed by the reference block, when the enlarged probe diameter portion and the probe are moved upward against the elastic force of the elastic member, the elastic member is compressed between the lower end of the first guide member and the enlarged probe diameter portion.

12. The sealing apparatus of claim 1, wherein an upward movement position of the probe corresponding to a sealing gap that provides good sealing by moving the upper sealing block and the lower sealing block relative to each other before the sealing gap is measured is obtained, and the obtained upward movement position is set as a zero point position, and
then, by moving the upper and lower sealing blocks relative to each other and comparing a height increase or a change in the height increase of the probe when a plurality of battery cells are actually sealed with the zero point position, a sealing gap or a change in sealing gap when the battery cells are actually sealed is measured in real time based on the zero point position.

13. The sealing apparatus of claim 12, wherein the zero point position is the upward movement position of the probe when stoppers respectively provided in the upper sealing block and the lower sealing block come into contact with each other.

14. The sealing apparatus of claim 1, further comprising a determination unit configured to measure the sealing gap at a time of detection by comparing the detected height increase of the probe with sealing gap data corresponding to the height increase, and
determine whether the sealing is defective by comparing the measured sealing gap with sealing gap data corresponding to defective sealing.

15. The sealing apparatus of claim 2, wherein the sealing gap measuring unit is coupled to the upper sealing block via a cover member configured to block heat of the heating block between the heating block of the upper sealing block and the sealing gap measuring unit.
